# FASCICULE DE BREVET EUROPEEN

(11) **EP 2 057 795 B1**
(45) Date de publication et mention de la délivrance du brevet: **05.06.2019**
(21) Numéro de dépôt: 07731927.5
(22) Date de dépôt: 20.04.2007
(51) Int. Cl.: H04L 12/70

(54) **PROCÉDÉ DE PROPAGATION DE ROUTES DE TÉLÉPHONIE IP MULTIPLES, SERVEUR DE LOCALISATION ET PROGRAMME D'ORDINATEUR CORRESPONDANTS**
VERFAHREN ZUM PROPAGIEREN VON MEHREREN IP-TELEFONIEROUTEN, ENTSPRECHENDER LOKALISIERUNGSSERVER UND COMPUTERPROGRAMM
METHOD FOR PROPAGATING MULTIPLE IP TELEPHONY ROUTES, CORRESPONDING LOCATING SERVER AND COMPUTER PROGRAMME

(30) Priorité: 21.04.2006 FR 0603625
(43) Date de publication de la demande: 13.05.2009
(73) Titulaire: Transpacific IP Group Limited, Grand Cayman KY1-1001 (KY)
(72) Inventeur: BOUCADAIR, Mohamed, 14000 Caen (FR); MORAND, Pierrick, 14760 Bretteville sur Odon (FR)
(74) Mandataire: Eidelsberg, Olivier Nathan
(86) Numéro de dépôt international: PCT/FR2007/051152
(87) Numéro de publication internationale: WO 2007/122356

(56) Documents cités:
- WO-A-02/058349
- ROSENBERG J ET AL: "Usage of TRIP in Gateways for Exporting Phone Routes" IETF STANDARD-WORKING-DRAFT, INTERNET ENGINEERING TASK FORCE, IETF, CH, no. 3, novembre 2001 (2001-11), XP015005120 ISSN: 0000-0004
- ROSENBERG DYNAMICSOFT H SCHULZRINNE COLUMBIA UNIVERSITY J: "A Framework for Telephony Routing over IP" IETF STANDARD, INTERNET ENGINEERING TASK FORCE, IETF, CH, juin 2000 (2000-06), XP015008654 ISSN: 0000-0003

## Description

### 1 Domaine de l'invention

La présente invention se rapporte au domaine de la téléphonie sur des réseaux de type Internet. La présente invention concerne plus particulièrement la gestion de routes permettant à des entités de gestion de domaines de téléphonie de disposer de plusieurs routes vers la même destination afin d'acheminer des appels.

En particulier, l'invention concerne la propagation des routes entre des entités de gestion de domaines de téléphonie sur des réseaux mettant en oeuvre, par exemple, un mécanisme de communication basé sur le protocole IP (de l'anglais « Internet Protocol » pour « Protocole Internet »).

Le réseau IP est un réseau fédérateur adopté par les opérateurs pour mutualiser leurs offres de service hétérogènes, dont la téléphonie IP couramment référencée par le sigle VoIP (de l'anglais « Voice over IP » pour « Voix sur IP »), ou plus généralement groupée sous le thème des services conversationnels.

Le déploiement de telles applications de voix ou de vidéo en temps réel vers le tout IP, ainsi que la migration du réseau commuté, traditionnellement désigné par le RTC, contraint les opérateurs à fournir une couverture globale, à l'échelle mondiale, de ces services. Ceci ne se résume pas seulement par une nécessité d'assurer des points de présence aux quatre coins du globe mais également par le besoin d'offrir aux clients la possibilité de joindre n'importe quelle destination (y compris les clients des autres opérateurs). Cette couverture globale est réalisable par l'établissement d'accords d'interconnexion avec d'autres fournisseurs de service tiers afin de pouvoir étendre la portée d'un service en dehors des bordures administratives de chaque fournisseur de service.

Dans le fil de cette dynamique, on prévoit que la coopération entre les fournisseurs de service de VoIP/ToIP (« Telephony over IP » pour « Téléphonie sur IP ») s'intensifiera dans le court et le moyen termes. Cette intensification doit permettre la transmission du trafic lié à la voix vers des points de terminaison se trouvant en dehors d'un seul domaine de gestion de la téléphonie sur IP (encore appelé « ITAD » de l'anglais « IP Telephony Administrative Domain ») géré par un seul opérateur. Ces coopérations entre fournisseurs de service sont d'autant plus importantes que les accords classiques de type bilatéraux ne permettent pas d'assurer la couverture globale requise par les opérateurs.

De plus, les offres de téléphonie déployées au dessus d'un réseau IP doivent répondre à des contraintes de qualité telles que la haute disponibilité et la forte tolérance aux pannes. La contrainte de disponibilité du service ne concerne pas uniquement les domaines de téléphonie (i.e. la couche service), mais aussi les noeuds qui gèrent le routage des flux IP (i.e. le niveau transfert).

Dans la suite de ce document on emploiera indifféremment les termes de « Qualité de Service » ou de « QoS » qui désignent la même notion. On fait également référence aux termes suivants :
- LS (« Location Server » pour « Serveur de Localisation ») : c'est une entité d'un domaine de téléphonie (ITAD) qui gère les localisations des clients et des routes d'un ITAD local. Cet équipement peut s'interfacer avec un LS voisin pour apprendre la localisation des clients gérés par d'autres ITAD ;
- AS (« Autonomous System » pour « Système Autonome ») : C'est un ensemble de ressources IP gérées par une seule entité administrative, également appelée « fournisseur de connectivité IP ». Dans le cadre du protocole de routage inter domaines BGP (de l'anglais « Border Gateway Protocol », [RFC1771]), chaque AS est identifié par un identifiant unique. Cet AS est également appelé « Domaine de Transfert IP». On entend par "couche ou niveau Transfert" les deux couches OSI Réseau et Transport, dans l'ensemble de ce document.

### 2 Solutions de l'art antérieur

### 2.1 Art antérieur

En téléphonie « classique » (RTC, Réseau Téléphonique Commuté), les opérateurs de téléphonie établissent des accords bilatéraux pour étendre la couverture globale du service téléphonique. Le niveau de couverture atteint dépend essentiellement du nombre d'accords établis. On peut très schématiquement considérer que deux catégories d'opérateurs de télécommunications existent : les opérateurs locaux et/ou nationaux et les opérateurs mondiaux. Les grands opérateurs mondiaux établissent un grand nombre d'accords et peuvent ainsi joindre la plupart des destinations existantes. Les opérateurs locaux établissent seulement un nombre limité d'accords dont seulement un ou deux avec de grands opérateurs. Ainsi, un opérateur national historique d'un pays en voie de développement va établir des accords avec d'autres opérateurs nationaux et un ou deux accords avec des opérateurs mondiaux pour évacuer les communications vers le reste du monde.

Actuellement, la plupart des opérateurs migrent leurs réseaux RTC vers des solutions et des infrastructures basées sur le réseau « IP ». Pour accompagner le déploiement de services de « VoIP », l'IETF (« Internet Engineering Task Force » pour « Groupe de développement de l'internet ») a porté de nombreux travaux de standardisation. Plusieurs protocoles ont été spécifiés parmi lesquels on peut citer SIP (« Session Initiation Protocol » pour « Protocole d'initialisation de session »), SDP (« Session Description Protocol » pour « protocole de description de session »), RTP (« Real-time Transfer Protocol » pour « Protocole de transfert en temps réel »), RTCP (« Real-time Transfer Control Protocol » pour « Protocole de contrôle de transfert en temps réel »), MGCP (« Multimedia Gateway Control Protocol » pour « Protocole de contrôle d'épine dorsale multimédia »), SAP (« Session Announcement Protocol » pour « Protocole d'annonce de session ») et TRIP (Telephony Routing Over IP, [RFC3219] pour « Routage de la téléphonie sur IP »). Ces protocoles répondent à des besoins différents et intègrent en particulier la signalisation et la commande des appels, l'échange des flux média et leur contrôle et l'échange d'informations pour le routage des appels.

Pour plus d'information sur le protocole TRIP, on se référera au document de normalisation RFC3219. C'est notamment dans le cadre de cette spécification RFC3219 que s'inscrit la présente invention.

TRIP permet à des ITAD interconnectés d'échanger l'ensemble des destinations qu'ils peuvent joindre et facilite aussi la sélection des « Gateway » (« Autoroute » ou « épine dorsale ») les plus appropriées pour évacuer du trafic de téléphonie IP vers le réseau RTC. Le protocole TRIP est mis en oeuvre par des LS (« Location Servers » pour « Serveurs de localisation ») qui propagent des routes TRIP contenant des attributs permettant de qualifier les routes en question. L'utilisation de ce protocole particulier est indépendante du type du protocole de signalisation déployé pour l'établissement effectif des appels. Le protocole TRIP peut être utilisé conjointement avec SIP, H.323 ou tout autre protocole de signalisation.

Chaque LS maintient une base de données de routage locale dite TRIB (« Telephony Routing Information Database » pour « Base de données d'information de routage de la téléphonie »). Cette base de routage est alimentée par des annonces reçues des LS voisins (d'un autre domaine de téléphonie, par exemple). Le fonctionnement du protocole TRIP est similaire à celui du protocole BGP (« Border Gateway Protocol »). Les annonces entre LS voisins sont effectuées sous la forme de messages de mise à jour de route, appelé message «UPDATE ». Ce message est défini par le protocole TRIP et est échangé entre les LS pour informer un LS du même domaine ou du domaine voisin des routes disponibles.

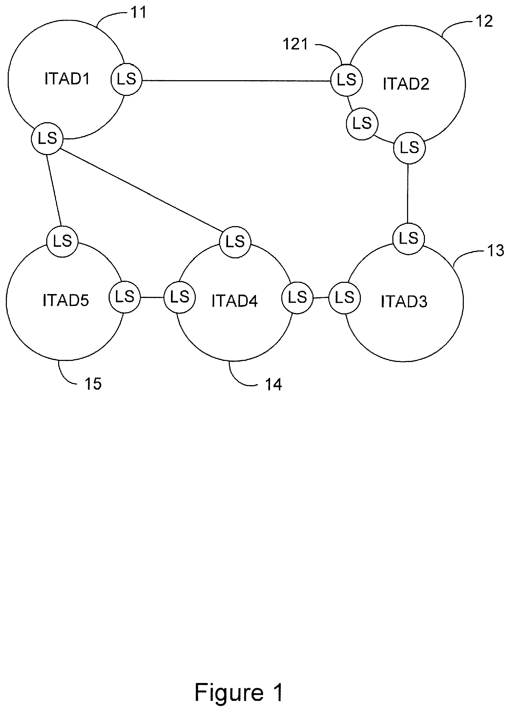

On décrit, en relation avec la figure 1, l'activation du protocole TRIP entre différents ITAD (pour des raisons de simplicité, on utilise également le terme « domaine » pour dénoter un ITAD), chaque ITAD étant administré par un seul opérateur de téléphonie. Ces opérateurs disposent chacun d'un ou plusieurs LS et d'un ou plusieurs serveurs de proximité (PS, Proxy Server). Chaque LS maintient une base de routage qu'il alimente avec des annonces reçues de ses voisins (situés dans d'autres domaines) et des LS de son propre domaine. Ces annonces sont mises à jour et redistribuées à d'autres voisins si les accords le permettent. Chaque PS est responsable de l'établissement des appels et le traitement des messages de signalisation reçus de la part des clients ou d'autres PS. Dans la figure 1, seulement les LS sont représentés.

Ainsi l'ITAD4 14, par exemple, met à jour les annonces reçues de l'ITAD5 15 et les re-propagent à ITAD3 13. Il convient de noter qu'un ITAD n'est pas nécessairement déployé sur un seul « domaine de Transfert IP», également appelé un AS.

Du point de vue routage, un LS traite trois types de routes:
- les routes externes (External Routes), reçues de LS situés dans des ITAD voisins ;
- les routes internes (Internai Routes), reçues de LS situés dans le même ITAD ;
- les routes locales (Local Routes), configurées localement dans chaque LS pour être injectées dans les processus TRIP. Cette opération est réalisée soit par configuration statique ou par redistribution d'informations provenant d'autres protocoles de routage.

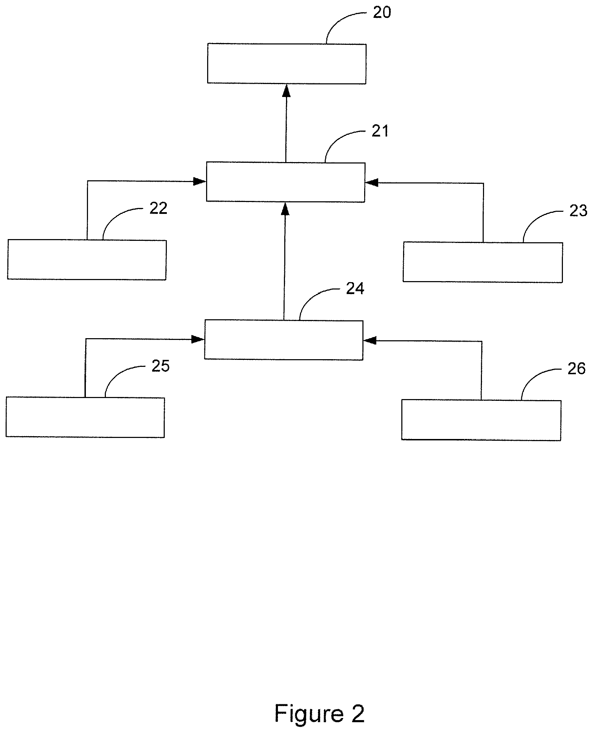

Ainsi, quatre types de « TRIB » sont gérés par un LS comme l'illustre la figure 2. Ces tables existent pour un même LS, les relations entre ces tables sont illustrées en relation avec la figure 2.
- Adj-TRIBs-In 22 (Adjacent TRIB in): stocke les informations de routage véhiculées par des messages UPDATE. Ces informations de routage, également appelées « routes », sont les entrées d'un processus de sélection 21 de routes (Décision Process). Un LS donné maintient une table Adj-TRIB-In 22 (pour adjacent TRIB in qui stocke l'ensemble d'annonces de routes reçues de la part d'un LS adjacent) par LS voisin ;
- Ext-TRIB 24 (External TRIB): une seule table Ext-TRIB (external TRIB) est maintenue par LS. Cette table contient le résultat d'un processus de sélection de routes appliqué aux routes externes 25 (Adj-TRIBs-IN) et locales 26 (Local Routes). Les techniques de l'art antérieur ne permettent de choisir qu'une seule route par destination ;
- Loc-TRIB 20 (Local TRIB): cette table contient les routes locales résultant de l'application des politiques de routage locales à chaque LS ;
- Adj-TRIBs-Out 23 (Adjacent TRIB out): Ce sont les routes que le LS local annoncera à ses pairs.

A ce stade, TRIP permet de stocker une seule et unique route par destination dans la TRIB locale. Cette route est celle qui est annoncée au « pairs » (« peers » en anglais) d'un LS donné, c'est-à-dire aux LS voisins (qui peuvent être dans le même ITAD ou un ITAD différent), lorsqu'un accord existe entre eux. Pour ce faire, TRIP met en oeuvre un processus de sélection de route pour déterminer la meilleure route à stocker dans sa TRIB locale. Si une route vers cette destination existe déjà, alors le processus de sélection est invoqué. Si cette nouvelle route est choisie par le processus, elle remplace l'ancienne dans la TRIB locale.

Le document de l'art antérieur WO02/058349 présente une solution basée sur TRIP dans laquelle au sein d'un même ITAD plusieurs routes vers une même destination peuvent être annoncées. Néanmoins cette pluralité ne dépasse pas les frontières d'un ITAD.

### 2.2 Inconvénients de l'art antérieur

Un inconvénient de cette technique de l'art antérieur est l'absence de moyens pour gérer la résilience des routes annoncées par le protocole TRIP ou des moyens pour gérer le partage de charge entre plusieurs routes TRIP desservant la même destination.

En effet, selon la technique actuelle, une seule et unique route est annoncée, si elle existe, pour une destination donnée. Or, dans le cadre de la VoIP/ToIP, il est recommandé d'avoir une route de sauvegarde (dynamique) ou des routes alternatives pour des besoins de partage de charge et de secours afin d'assurer un service à haute disponibilité proche des cinq neuf autre que les routes statiques.

L'état de l'art actuel ne permet pas de fournir un tel service de sauvegarde ou de répartition de charge du fait de l'absence de routes alternatives vers la même destination, stockées dans la table de routage de téléphonie locale.

### 3 Résumé de l'invention

La solution proposée par l'invention permet de pallier ces inconvénients de l'art antérieur, grâce à un procédé de propagation de routes d'acheminement d'au moins un flux numérique selon la revendication 1, ainsi qu'un procédé de signalisation de routes d'acheminement vers une destination par un premier serveur de proximité selon la revendication 5, les serveurs de localisation et de proximité correspondant selon les revendications 8 et 9, ainsi que les produits programme d'ordinateur correspondants selon les revendications 11 et 12. D'autres aspects de l'invention sont décrits par les revendications dépendantes.

### 4 Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, présentée en relation avec l'art antérieur, présente un exemple d'architecture d'un réseau avec activation du protocole TRIP ;
- la figure 2 illustre la structure des bases de données de routage (TRIB) utilisées par les serveurs de localisation (LS) routant les appels dans les domaines de téléphonie (ITAD) présentés en figure 1 ;
- la figure 3 illustre le format d'un attribut « Capability »;
- la figure 4 illustre le format du champ « Capability Value » du nouvel attribut « Multiple Route Capability» spécifique à l'invention ;
- la figure 5 présente le format conventionnel de l'attribut « TRIP Route » selon la spécification RFC3219 ;
- la figure 6 présente le format du champ « TRIP Route » modifié selon l'invention.
- Figure 7 présente un exemple de mise en oeuvre de la prise en charge de routes multiples entre des domaines de téléphonie ;
- Figure 8 présente un exemple de mise en oeuvre de propagation de routes à l'aide du protocole SIP.

### 5 Description détaillée de l'invention

Pour plus de clarté, on présente ci-après un mode de réalisation de l'invention mettant en oeuvre le protocole TRIP au niveau de la couche service. Cependant, il est clair que l'invention ne se limite pas à ce protocole particulier, mais peut également s'appliquer à tout nouveau protocole d'échange de routes entre opérateurs de téléphonie IP.

### 5.1 Rappel du principe de l'invention

L'invention propose donc de doter les plateformes de téléphonie sur IP de moyens simples et efficaces pour pallier une panne de lien, l'indisponibilité d'une route (au sens routage d'appel téléphonique), ou encore des phénomènes de congestion. La présente invention ne détaille pas comment on utilise les routes multiples afin d'éviter les liens congestionnés ou pour activer le partage de charge. Mais, détaille seulement le procédé innovant consistant à pouvoir propager plusieurs routes vers une même destination et de pouvoir les stocker dans les tables de routages de téléphonie locales. L'exploitation des routes multiples n'est pas limitée à la QoS ou au partage de charge, mais peut être utilisée pour d'autres besoins. Cette présentation ne limite pas par conséquence l'exploitation des routes multiples.

Le principe général de l'invention repose sur un mécanisme qu'on appelle « Routage Multiple », et qui, grâce à l'activation du protocole TRIP entre les LS de différents ITAD, identifie et propage les différentes routes possibles vers une destination donnée entre des ITAD distincts.

Afin d'éviter une clôture de sessions TRIP à cause d'échange d'attributs ou de messages non conformes à la RFC TRIP, la norme RFC 3219 suggère d'échanger durant l'ouverture de la session TRIP des « capacités » (« capabilities ») de chaque LS via les messages UPDATE et de ne s'échanger que les attributs supportés par les deux LS pairs. Ainsi chaque LS informe son voisin des options qu'il supporte, ce dernier ne doit en aucun cas lui envoyer des messages qui ne seront pas interprétés correctement par son voisin. Dans le cas contraire, la session TRIP sera clôturée.

Dans le cadre de cette invention, on introduit un nouvel attribut « Capability » TRIP dénoté « Multiple Route Capability » et un nouveau format de l'attribut « TRIP Route ».

Cet attribut « Multiple Route Capability » a pour but d'informer les LS pairs TRIP du support des routes multiples par l'instance TRIP active lors de l'ouverture de la session TRIP. Sans cette phase de négociation, la session TRIP risque d'être clôturée si un pair LS envoie des « TRIP Route » non conformes au format défini dans la spécification RFC3219. Une fois la phase de négociation des « Capabilities » réussie, deux pairs LS peuvent s'échanger des messages UPDATE contenant des attributs « TRIP Route » modifiés. Par conséquent, le protocole TRIP supporte des routes multiples pour une même destination.

On montre dans la suite de la description que l'attribut « TRIP Route » modifié indique si la route en question est la route sélectionnée par le LS local (i.e. c'est la route sélectionnée par le processus de sélection de route TRIP classique) en valorisant le champ « Flag », (décrit ci-dessous) à la valeur 1. Cette indication sert à informer le LS voisin de la préférence locale entre les routes multiples. Sauf indication de la part du LS voisin, cette route est utilisée par défaut pour acheminer le trafic vers la destination finale. D'autres valeurs de ce champ peuvent être spécifiées pour caractériser la route annoncée. De telles valeurs ne sont pas spécifiées dans ce document.

On note que, dans la terminologie TRIP, une route dénote une liste d'adresses de destination (chaque adresse est définie par un AFI « Adress Family Indicator » pour « Indicateur de Famille d'Adresse » et un préfixe) associée à un protocole applicatif tel que SIP ou H.323. A chaque route est associé un ensemble d'attributs tels que le "NextHopServer", "AdvertisementPath" et "RoutedPath", dont la signification de ces attributs est détaillée dans la RFC3219 respectivement dans les paragraphes 5.3, 5.4, 5.5. Ces attributs servent à orienter le choix de la route à installer dans les TRIB.

### 5.2 Description détaillée

### 5.2.1 « Multiple Route Capability »

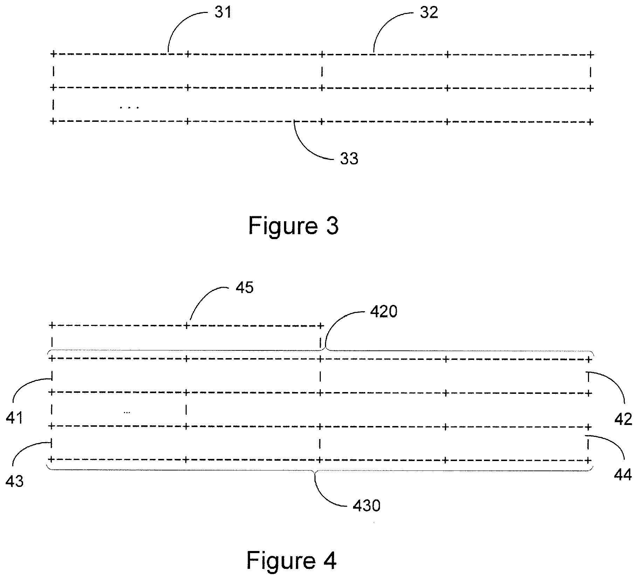

Au démarrage d'une session TRIP entre deux LS voisins, ces derniers échangent leurs "Capabilities" respectives, en termes d'extensions supportées, comme décrit dans la RFC3219. Le format de l'attribut optionnel, c'est-à-dire l'attribut "Capability" est décrit par la figure 3. On note que cet attribut est optionnel et n'est pas forcément supporté par toutes les implémentations TRIP.

Il contient trois champs 31, 32 et 33:
- un premier champ 31 « Capability Code», d'une longueur de deux octets contient un code identifiant la « Capability »;
- un second champ 32 « Capability Length », d'une longueur de deux octets également, contient la longueur de la « Capability »;
- enfin, un troisième champ 33 « Capability Value », dont la taille est variable, contient la valeur de la « Capablity ».

Pour éviter les erreurs lors d'échange de messages UPDATE contenant des attributs "TRIP Route" modifiés, éviter une clôture des sessions TRIP et indiquer aux pairs d'un LS donnés le support des routes multiples, on introduit une nouvelle « Capability » dénotée « Multiple Route Capability » dont le « Capability Code » (code de définition de la capacité) est égal à 3.

Le format du champ 33 « Capability Value » de l'attribut « Capability Information » spécifique au « Multiple Route Capability » est illustré par la figure 4. Il contient tout d'abord un champ 45 « Max of Multiple Route » d'une taille de deux octets.

De plus, il comprend une série de champs 41 « Address Family » (Famille d'adresse) et de champs 42 « Application Protocol » (Protocole d'application), chacun de ces deux champs présentant une taille de deux octets. Un pair LS peut indiquer à ses voisins les types d'adresses supportées et qui seront utilisées lors de la valorisation des champs des routes TRIP. Un ou plusieurs couples (*Address Family, Application Protocol*) peuvent être renseignés. En relation avec la figure 4, un premier couple 420 est formé des champs 41 et 42 et une second couple 430 est formé des champs 43 et 44 par exemple.

Les significations des champs 41, 42, 43, 44 *"Address Family"* et *"Application Protocol*" sont les mêmes que celles décrites dans la section 5.1.1 de la RFC3219, et détaillées en annexe de la présente description.

Le champ 45 « Max of Multiple Routes », qui est un entier non signé (« unsigned integer »), indique le nombre maximum de routes multiples pour la même destination supporté par un LS local. Le nombre de routes multiples annoncé par un LS ne peut pas dépasser la valeur minimale du maximum de routes multiples (« Max of Multiple Routes ») du LS local et celui de son voisin (i.e. min(max(LS local), max(LS voisin))).

### 5.2.2 L'attribut « TRIP Route » modifié

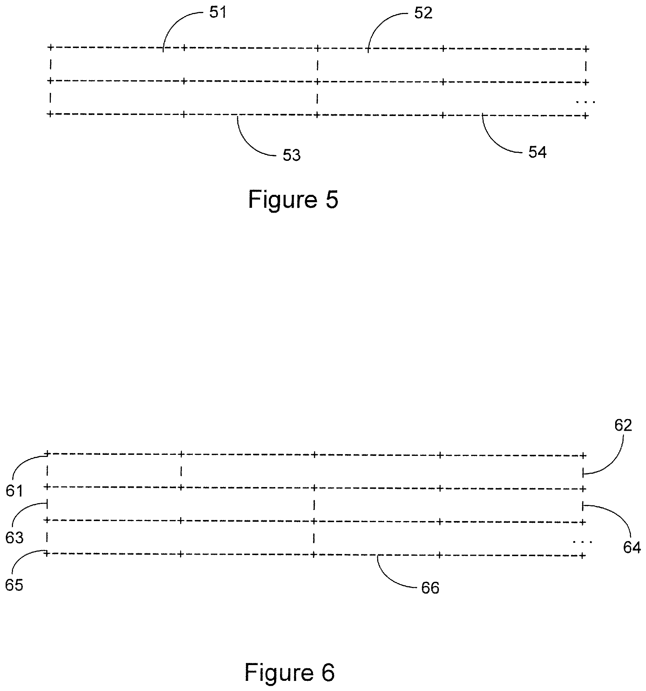

La spécification actuelle du protocole TRIP permet de sélectionner et d'annoncer (si elle existe) une seule et unique route par destination. Le format de l'attribut "TRIP Route" définit par la RFC3219 est illustré par la figure 5.

Il contient quatre champs 51, 52, 53 et 54, correspondant respectivement à « Address Family », « Application Protocol », « Length » et enfin « Address ». Les trois premiers champs 51, 52 et 53 présentent une taille de deux octets alors que le dernier champ 54 est de taille variable.

Selon l'invention, afin de permettre d'annoncer plusieurs routes TRIP servant la même destination, l'attribut « TRIP Route » est modifié comme le montre la figure 6.

Il contient six champs, numérotés de 61 à 66, et dont la nomination et la taille sont les suivantes :
- un champ 61 « Flag » d'une taille d'un octet ;
- un champ 62 « Path Identifier » d'une taille de trois octets ;
- un champ 63 « Address family » d'une longueur de deux octets ;
- un champ 64 « Application Protocol » d'une longueur de deux octets ;
- un champ 65 « Length » d'une longueur de deux octets ;
- un champ 66 « Address » d'une longueur variable.

Les champs « Address Family », « Application Protocol », « Length » et « Address » sont définis dans la section 5.1.1.1 de la norme RFC3219, et reportés en annexe de la présente description.

Les champs nouveaux selon l'invention ont les significations suivantes:
- le champ 61 « Flag » est utilisé pour caractériser la route annoncée. Dans le cadre de cette invention, la valeur "1" est utilisée pour indiquer aux LS voisins que cette route est celle sélectionnée par le processus TRIP local. Cette indication sert à informer le LS voisin de la préférence locale en cas de routes multiples. Sauf indication contraire de la part du LS voisin, cette route sera utilisée par défaut pour acheminer le trafic vers la destination finale. D'autres valeurs peuvent être spécifiées en fonction des besoins. Par exemple, dans un mode de réalisation particulier, cet indicateur pourrait renseigner le niveau de Qualité de Service. Dans un autre mode de réalisation, dans lequel l'ensemble des liens réseaux est sécurisé, cet indicateur peut, préciser si cette route est principale ou secondaire (en secours).
- le champ 62 « Path Identifier » est introduit pour différencier les chemins servant la même destination, c'est-à-dire un ou plusieurs préfixes. Ce champ contient une valeur renseignée par l'opérateur de téléphonie. Cette valeur dépend des implémentations TRIP et elle n'a de signification que localement.

### 5.2.3 Procédure générale de propagation.

On rappelle que la version standard du protocole TRIP prévoit l'échange les routes entre deux LS voisins via le message UPDATE. Ce message UPDATE comporte un certain nombre d'attributs. Un de ces attributs "TRIP route" contient des routes associées à des destinations données.

Une seule route est annoncée par destination car le processus de sélection de route ne permet de choisir qu'une seule route (dite aussi meilleure route).

Selon l'invention, un LS annonce des routes multiples servant la même destination, en envoyant un message UPDATE contenant plusieurs attributs « TRIP Route » modifiés tels que décrits dans la section précédente, à ses LS pairs/voisins. A chaque "TRIP Route" on associe des attributs de route spécifiques tels que le chemin des ITAD (les deux attributs qui renseignent ce type d'information sont « AdvertisementPath » et « RoutedPath »), le prochain saut (renseigné par l'attribut « NextHopServer »), etc. Toutes ces routes servent la même destination.

La route sélectionnée est marquée grâce au champ « Flag ». Sauf indication de son voisin TRIP (c'est-à-dire le LS avec lequel il a établi une session TRIP), cette route est utilisée par défaut pour évacuer le trafic correspondant. Le nombre maximum de routes à annoncer par destination est négocié à l'ouverture de la session TRIP par le biais du « Multiple Route Capability » décrit dans la section précédente.

Lorsqu'un LS reçoit l'ensemble des routes possibles envoyées par son LS voisin, il ne remplace pas systématiquement les routes déjà sélectionnées par le processus de sélection de route conventionnel. En effet, un LS local choisit les routes à installer dans sa TRIB locale en fonction de sa politique locale de sélection. Cette dernière est développée dans la section suivante de la présente description. L'identifiant d'une route inter ITAD est local à chaque ITAD.

L'implémentation TRIP supportant les routes multiples doit garder une association entre la route renseignée dans les tables « Adj-TRIB-In » et « Loc-TRIB ». En effet, en relation avec la figure 1, déjà introduite en préambule de cette description, on suppose que ITAD1 11 annonce à ITAD5 15 deux routes vers une destination D, attachée à ITAD3 13, identifiées par des « Path Identifier » dont les valeurs sont « 1 » et « 2 ». La même destination D est alors annoncée par ITAD4 14 à ITAD5 15 avec un identifiant de route égal à « 1 ». Si le processus local à ITAD5 15 a préalablement pris la décision de sélectionner la route, dont l'identifiant est « 2 », annoncée par ITAD1 et celle annoncée par ITAD4 14, dans la TRIB locale d'ITAD5 15, ces deux routes peuvent alors être marquées respectivement par 1 et 2.

### 5.2.4 Sélection des routes multiples

De façon à supporter les routes multiples, le processus de sélection de route TRIP n'est pas modifié. Ce processus se charge de sélectionner la meilleure route vers une destination donnée conformément aux spécifications détaillées dans la spécification RFC3219.

Cependant, ce processus de sélection classique se voit épaulé d'un autre mécanisme de sélection de routes multiples, sur l'ensemble des routes reçues de serveurs de localisation (LS) voisins. Ce nouveau mécanisme est en charge de décider si une route doit être ajoutée à la liste des routes multiples et par conséquence d'intégrer cette route dans la TRIB locale sans remplacer la route sélectionnée par TRIP (c'est à dire le processus de sélection de route classique).

Le processus de sélection de route peut être configuré par un administrateur d'un LS exécutant le protocole TRIP, en renseignant certains paramètres, listés ici :
- l'activation ou la désactivation du mécanisme de routes multiples ;
- le nombre maximum de routes multiples pour une destination donnée ;
- les routes externes sont-elles les seules concernées ;
- les routes multiples doivent-elles être issues du même LS voisin ;

Le processus de sélection de routes multiples est conçu pour prendre en compte des informations supplémentaires, par exemple :
- avoir la même préférence que la route sélectionnée par le processus de sélection de route TRIP, c'est-à-dire la même valeur de l'attribut « LocalPreference ». Cet attribut permet d'indiquer une préférence d'une route par rapport à d'autres routes ;
- avoir la même longueur de « AdvertisementPath » ou de « RoutedPath » préférée que la route sélectionnée par le processus de sélection de route TRIP;
- avoir la même valeur de l'attribut « MultiExitDisc » que la route sélectionnée par le processus de sélection de route TRIP;

### 5.2.5 Signalisation de la route choisie

Dans le cadre de la téléphonie sur IP, les informations contenues dans les TRIB guident les serveurs d'appel VoIP pour choisir le chemin à suivre pour joindre un numéro donné.

Par exemple, dans le cas d'une plateforme de service utilisant le protocole « SIP », le Serveur de Proximité ("Proxy Server") questionne les LS locaux sur la disponibilité de routes pour joindre un préfixe donné. Dans le cas où la procédure de routes multiples est activée entre des ITAD voisins, deux cas de figure peuvent se présenter :
- Si, dans un premier cas, le Serveur de Proximité a choisi la route sélectionnée par le processus de sélection de route TRIP classique, les messages « SIP » ne sont pas impactés. La requête « SIP » suit alors le chemin inter ITAD sélectionné par le processus de sélection de route TRIP classique.
- En revanche, si le Serveur de Proximité a choisi une route autre que celle sélectionnée par le processus de sélection de route TRIP classique, le champ « Route » des messages « SIP » est valorisé pour être aligné avec l'attribut « RoutedPath » de la route choisie par le Serveur de Proximité.

Afin de permettre cette valorisation, les Serveurs de Proximité insèrent un en-tête « Route » dont la valeur est déduite de la liste des segments ITAD_PATH et renseignée par l'attribut « RoutedPath ». Pour ce faire, le champ « Route » du protocole SIP, défini par la norme RFC3261, est modifié pour introduire les variables « ITAD_PATH », « ITAD_Identifier » et « ITAD_Id ».

On introduit ici un exemple de syntaxe du champ "route", défini par une grammaire BNF classique, et contenant les modifications selon l'invention par rapport à la norme RFC3219 :
Route = "Route" ":" 1#name-addr [route-extension];
name-addr = [display-name] "<" addr-spec ">";
display-name = *token | quoted-string;
addr-spec = SIP-URL | URI | ITAD_PATH;
SIP-URL = "sip:" [userinfo "@"] hostport url-parameters [headers];
ITAD_PATH="itad_path="ITAD_Identifier;
ITAD_Identifier=*(ITAD_id ",")
ITAD_Id = 1*32DIGIT;

Pour ce qui est du champ « ITAD_id », les valeurs 0 à 255 sont réservées. Ces valeurs doivent être assignées par IANA (« Internet Assigned Number Authority » pour « Autorité d'assignation des numéros Internet », organisme s'occupant de l'affectation des numéros requis par les RFC de l'IETF).

L'ITAD_PATH est une liste d'identifiants d'ITAD qui seront traversés par les messages « SIP » pour joindre une destination donnée.

Lorsqu'un « proxy » SIP reçoit une requête SIP avec un en-tête "Route" dont la valeur est une liste d'identifiants d'ITAD, ce « proxy » doit vérifier si l'identifiant du domaine auquel il appartient est présent dans la liste des ITAD. Si oui, il met à jour la liste des ITAD en supprimant son identifiant de la liste. Le « proxy » SIP doit alors trouver une route pour joindre le premier domaine de la liste (le « proxy » SIP invoque le LS de son propre domaine pour trouver cette route). Si son identifiant n'est pas présent dans la liste, le « proxy » SIP ne modifie pas l'en-tête "Route" du message reçu, mais il doit trouver une route vers le premier domaine de la liste renseignée dans "Route", et la requête SIP suit alors la route sélectionnée. Si le message SIP reçu ne contient pas d'entête "Route", le « proxy » SIP procède au mécanisme de routage classique.

Ainsi, grâce au processus de propagation de routes multiples de cette invention, un serveur de localisation (LS) peut stocker, annoncer et recevoir plus d'une route TRIP pour une même destination donnée. Selon différentes applications possibles de la mise en oeuvre de ce procédé, ces routes multiples peuvent être exploitées par les applications utilisant par exemple le protocole « SIP ».

De plus, comme il est possible d'avoir plusieurs routes dans les TRIB, on diminue ainsi les phénomènes d'oscillation et d'instabilité des tables de routage. Ces phénomènes sont moins importants que dans le cadre d'un système proposant une route unique pour une destination donnée.

### 5.3 Exemple de mise en oeuvre

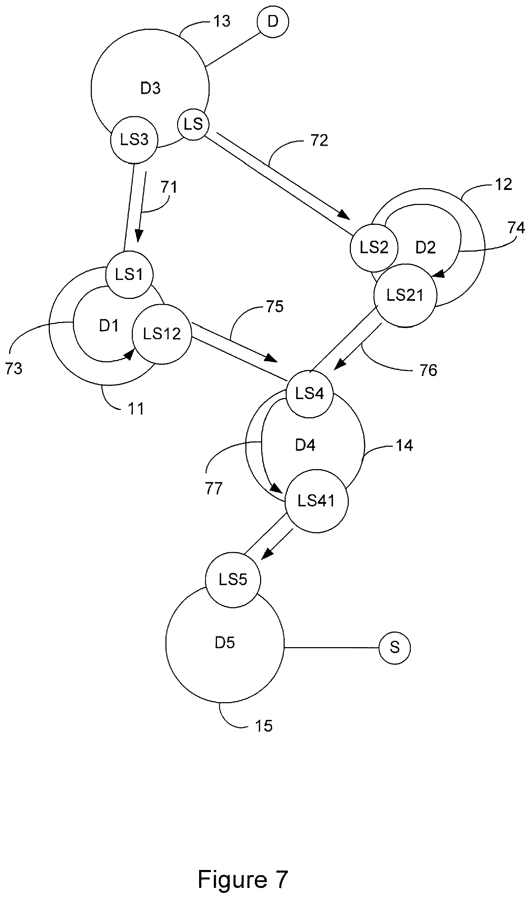

On présente, en relation avec la figure 7, un exemple de mise en oeuvre de la prise en charge de routes multiples entre les ITAD : D1, D2, D3, D4 et D5.

A l'ouverture de la session TRIP, les LS voisins échangent le message de capacité « Multiple Route Capability » afin de se prémunir de la clôture des sessions TRIP et informer les LS pairs du support des routes multiples.

On suppose qu'une destination téléphonique « D » est attachée au domaine D3 et gérée par celui-ci. Ce domaine D3 peut alors informer (71, 72) ses voisins au travers des sessions TRIP maintenues par ses serveurs de localisation LS qu'il dispose d'une route téléphonique pour joindre « D » par l'intermédiaire du message de mise à jour UPDATE. Dans cet exemple, ce message ne contient qu'une seule route. Cependant, il peut inclure plusieurs routes vers la même destination ou des destinations différentes.

A la réception du message UPDATE par le LS1 du D1 (ainsi que du D2), LS1 exécute le processus de sélection de routes multiples, si la route incluse dans le message de mise à jour est sélectionnée, elle est stockée dans la table de routage TRIP locale. LS1 et LS2 informent (73, 74) leurs pairs au sein de leurs domaines de cette nouvelle route. Tous les LS du D1 ont la même table de routage locale. Il en est de même pour les LS de D2.

Cette procédure décrite ci-dessus est réitérée (75, 76, 77) entre D1 et D4 et entre D2 et D4.

Par conséquent D4 reçoit deux messages de mise à jour provenant des LS de D1 et de D2 vers la même destination « D ». Le LS4 recevant (75, 76) ces messages UPDATE peut stocker dans sa table de routage TRIP locale ces deux routes et informe (77) son pair au sein du même domaine D4 de ces deux nouvelles routes. Ainsi, LS41 dispose de deux routes vers « D ». Ces deux routes sont propagées au LS5 du D5 via un message UPDATE. En conséquence, LS5 dispose de deux routes différentes pour joindre la destination « D ».

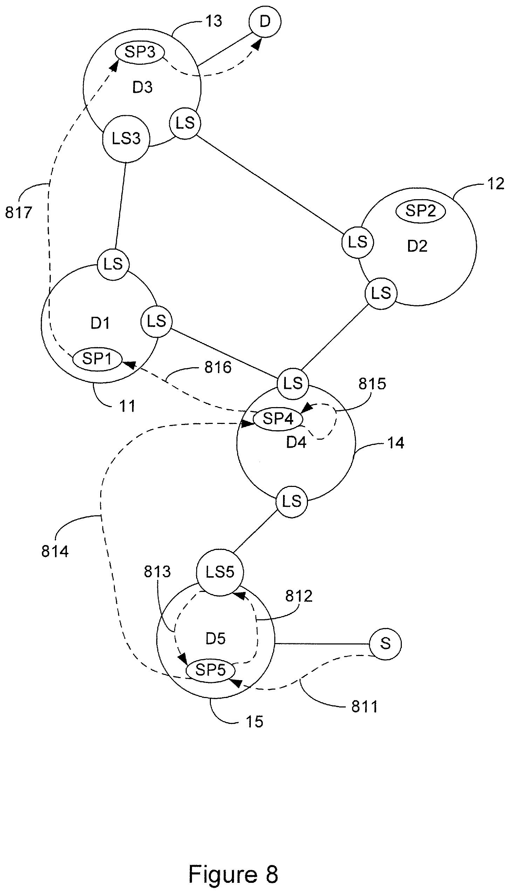

On présente maintenant, en relation avec la figure 8, le processus mis en oeuvre lorsqu'un client « S » veut joindre « D ». Pour ce faire, « S » envoie (811) un message SIP vers son serveur de proximité « proxy » SP5 du domaine D5.

Afin de router cet appel, ce dernier consulte (812) ses bases de données des clients et les LS. En réponse à cette requête, le LS envoie (813) une liste de routes desservant la destination « D » (dans cet exemple, deux routes sont envoyées au SP5 : celle passant par D2 et celle passant par D1, tout en indiquant la route par défaut ou toute information utile).

Le SP5 peut sélectionner une de ces deux routes pour transmettre la requête SIP. Dans cet exemple, le SP5 valorise l'en-tête « Route » à D4, D1, D3 et renvoie (814) la requête SIP au serveur de proximité SIP SP4 du D4 (le traitement de l'en-tête « Route » est conforme aux spécifications SIP, en particulier la RFC3261). A la réception de la requête SIP, le serveur de proximité SP4 du D4 extrait la liste des ITAD qui devront être traversés par cette requête (de l'en-tête « Route ») et vérifie (815) si son propre identifiant est dans la liste :
- Si son identifiant est présent dans la liste, alors le PS du D4 met à jour cet en-tête en supprimant son propre identifiant de la liste et en envoyant ?? au PS du prochain domaine pour joindre le premier domaine de liste mise à jour ;
- Si son identifiant n'est pas présent dans la liste; alors le PS du D4 consulte ses LS pour trouver une route vers la destination "D" et qui traverse le premier domaine de la liste renseignée dans l'en-tête SIP « Route » si la liste n'est pas vide. Si la liste est vide, alors le PS sélectionne une route pour joindre la destination et peut insérer à son tour un en-tête SIP « Route » contenant des identifiant des ITAD à traverser. Cette liste peut être complète ou non (i.e. contient l'intégralité des ITAD à traverser ou seulement quelques ITAD qui doivent être traversés).

Cette procédure de propagation 814, vérification 815 est réitérée (816, 817) jusqu'à ce que la requête parvienne au SP3 de D3 qui achemine à son tour la requête SIP vers « D ».

### ANNEXE

**RFC3219**

| Code | Famille d'adresse (« Address Family ») |
|---|---|
| 1 | « Décimal Routing Number » |
| 2 | « PentaDecimal Routing Numbers » |
| 3 | « E.164 Numbers » |

| Code | Protocole (« Protocol ») |
|---|---|
| 1 | SIP |
| 2 | H.323-H.225.0-Q.931 |
| 3 | H.323-H.225.0-RAS |
| 4 | H.323-H.225.0-Annex-G |

### Longueur (« Length »):

Correspond à la longueur du champ « Address », en octets ;

### Adresse (« Address »):

Correspond à une adresse (préfixe) du type de famille donné par le champ Famille d'adresse (« Address Family »). La longueur en octets de l'adresse est variable et est déterminée par la longueur de champ de la route.

Note aux inventeurs : merci de nous confirmer cette traduction de la RFC3219.

## Revendications

1. Procédé de propagation de routes d'acheminement d'au moins un flux numérique vers une destination par un premier serveur de localisation appartenant à un premier domaine de téléphonie IP et adapté pour gérer des localisations de clients et des routes de téléphonie dudit premier domaine de téléphonie IP, ainsi qu'à s'interfacer avec un serveur de localisation voisin pour apprendre la localisation des clients gérés par d'autres domaines de téléphonie IP, où une route de téléphonie est une liste d'adresses de destination associée à un protocole applicatif, ledit procédé comprenant les phases suivantes :
- réception, par ledit premier serveur de localisation, d'au moins deux routes de téléphonie en provenance d'au moins un serveur de localisation voisin permettant d'atteindre une destination, dites routes de propagation, par le biais d'un premier message de propagation ;
et **caractérisé en ce qu'**il comprend la phase:
- annonce, par ledit premier serveur de localisation desdites au moins deux routes de propagation à au moins un deuxième serveur de localisation d'un deuxième domaine de téléphonie voisin du premier.

2. Procédé de propagation de routes d'acheminement par un premier serveur de localisation d'un premier domaine de téléphonie IP selon la revendication 1, **caractérisé en ce qu'**il comprend :
- une phase préalable de négociation d'une capacité de gestion de routes de téléphonie multiples, en fonction d'au moins un paramètre prédéterminé, avec ledit au moins un deuxième serveur de localisation ;
- une phase préalable de négociation d'un nombre de routes de propagation à échanger servant une même destination entre ledit premier avec ledit au moins un deuxième serveur de localisation.

3. Procédé de propagation de routes d'acheminement par un premier serveur de localisation d'un premier domaine de téléphonie IP selon la revendication 1, **caractérisé en ce que** ladite phase de réception d'au moins deux routes de propagation permettant d'atteindre ladite destination comprend les étapes suivantes :
- réception d'au moins un message de mise à jour comprenant lesdites au moins deux routes de propagation ;
- sélection, parmi lesdites routes de propagation, d'au moins une route à conserver selon au moins un paramètre de sélection de routes de propagation prédéterminé ;
- ajout de ladite au moins une route à conserver dans une base de données de routes de téléphonie.

4. Procédé de propagation selon la revendication 3, **caractérisé en ce que** ladite étape de sélection d'au moins une route à conserver tient compte d'au moins un paramètre de marquage issu desdites au moins deux routes de propagation.

5. Procédé de signalisation de routes d'acheminement vers une destination par un premier serveur de proximité appartenant à un premier domaine de téléphonie IP et adapté pour traiter des messages de signalisation reçus de la part de clients dudit premier domaine de téléphonie ou d'un autre serveur de proximité, ledit domaine de téléphonie IP comprenant au moins un premier serveur de localisation adapté pour gérer des localisations de clients et des routes de téléphonie du premier domaine de téléphonie, ainsi qu'à s'interfacer avec un serveur de localisation voisin pour apprendre la localisation des clients gérés par d'autres domaines de téléphonie IP, où une route de téléphonie est une liste d'adresses de destination associée à un protocole applicatif,
ledit procédé étant **caractérisé en ce qu'**il comprend les étapes suivantes :
- interrogation, par ledit premier serveur de proximité, dudit premier serveur de localisation sur les routes de téléphonie, dites routes de service, permettant d'atteindre ladite destination ;
- réception, par ledit premier serveur de proximité, en provenance dudit premier serveur de localisation, d'au moins deux routes de service ;
- sélection, par ledit premier serveur de proximité, d'une route de service parmi lesdites au moins deux routes de service reçues dudit premier serveur de localisation, dite route de service sélectionnée ;
- insertion, par ledit premier serveur de proximité, d'une liste de domaines de téléphonie IP successifs à traverser composant ladite route de service sélectionnée, dans un premier message de signalisation ;
- émission, par ledit premier serveur de proximité, dudit premier message de signalisation à destination du serveur de proximité d'un domaine de téléphonie IP placé dans ladite liste.

6. Procédé de signalisation selon la revendication 5, **caractérisé en ce que** ledit premier message de signalisation est implémenté selon le protocole SIP et **en ce qu'**il comprend au moins un attribut permettant d'indiquer une liste de domaines de téléphonie IP traversés par ladite route de service sélectionnée.

7. Procédé de signalisation de routes d'acheminement vers une destination par un serveur de proximité d'un domaine de téléphonie IP selon la revendication 5, **caractérisé en ce qu'**il comprend :
- une phase de réception d'un second message de signalisation en provenance d'un second serveur de proximité ;
- une phase d'extraction dudit second message de signalisation de ladite liste de domaines de téléphonie IP traversés par ladite route de service sélectionnée ;
- une phase de mise à jour de ladite au moins une liste de domaines de téléphonie IP lorsque ledit premier domaine attaché audit premier serveur de proximité est identifié au sein de ladite liste ;
- une phase de recherche d'une route servant ladite destination lorsque ledit premier domaine n'est pas identifié au sein de ladite liste.

8. Serveur de localisation appartenant à un premier domaine de téléphonie IP et adapté pour gérer des localisations de clients et des routes de téléphonie dudit premier domaine de téléphonie IP, ainsi qu'à s'interfacer avec un serveur de localisation voisin pour apprendre la localisation des clients gérés par d'autres domaines de téléphonie IP, où une route de téléphonie est une liste d'adresses de destination associée à un protocole applicatif, comprenant les moyens de :
- réception d'au moins deux routes de téléphonie en provenance d'au moins un serveur de localisation voisin permettant d'atteindre une destination de téléphonie, dites routes de propagation, par le biais d'un premier message de propagation ;
**caractérisé en ce qu'**il comprend les moyens de:
- annonce desdites au moins deux routes à au moins un deuxième serveur de localisation d'un deuxième domaine de téléphonie voisin du premier.

9. Serveur de proximité appartenant à un premier domaine de téléphonie IP et adapté pour traiter des messages de signalisation reçus de la part de clients dudit premier domaine de téléphonie ou d'un autre serveur de proximité, ledit domaine de téléphonie IP comprenant au moins un premier serveur de localisation adapté pour gérer des localisations de clients et des routes de téléphonie du premier domaine de téléphonie, ainsi qu'à s'interfacer avec un serveur de localisation voisin pour apprendre la localisation des clients gérés par d'autres domaines de téléphonie IP, où une route de téléphonie est une liste d'adresses de destination associée à un protocole applicatif, ledit serveur de proximité étant **caractérisé en ce qu'**il comprend les moyens de :
- interrogation dudit premier serveur de localisation sur les routes de téléphonie, dites routes de service, permettant d'atteindre ladite destination ;
- réception, en provenance dudit premier serveur de localisation, d'au moins deux routes de service;
- sélection d'une route de service parmi lesdites au moins deux routes de service reçues dudit premier serveur de localisation, dite route de service sélectionnée ;
- insertion d'une liste de domaines de téléphonie IP successifs à traverser composant ladite route de service sélectionnée, dans un premier message de signalisation ;
- émission dudit premier message de signalisation à destination du serveur de proximité d'un domaine de téléphonie IP placé en tête dans ladite liste.

10. Serveur de proximité selon la revendication 9, **caractérisé en ce qu'**il comprend les moyens de :
- réception d'un deuxième message de signalisation en provenance d'un second serveur de proximité ;
- extraction dudit deuxième message de signalisation de ladite liste de domaines de téléphonie IP traversés par ladite route de service sélectionnée ;
- mise à jour de ladite au moins une liste de domaines de téléphonie IP lorsque ledit premier domaine attaché audit serveur de proximité est identifié au sein de ladite liste ;
- recherche d'une route de téléphonie servant ladite destination lorsque ledit premier domaine n'est pas identifié au sein de ladite liste.

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de propagation selon la revendication 1, lorsqu'il est exécuté sur un ordinateur.

12. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de signalisation selon la revendication 5, lorsqu'il est exécuté sur un ordinateur.

## Patentansprüche

1. Verfahren zum Propagieren von Routingrouten von mindestens einem digitalen Strom zu einem Ziel durch einen ersten Standortserver, der zu einer ersten IP-Telefoniedomäne gehört und zum Verwalten von Kundenstandorten und Telefonrouten der ersten IP-Telefoniedomäne eingerichtet ist, sowie zum Verbinden mit einem benachbarten Standortserver, um den Standort von Kunden zu erfahren, die von anderen IP-Telefoniedomänen verwaltet werden, wobei eine Telefonroute eine Liste von Zieladressen ist, die einem Anwendungsprotokoll zugeordnet sind, wobei das Verfahren die folgenden Schritte umfasst:
- Empfangen von mindestens zwei Telefonrouten von mindestens einem benachbarten Standortserver durch den ersten Standortserver, die es ermöglichen, ein als Ausbreitungsrouten bekanntes Ziel mittels einer ersten Ausbreitungsnachricht zu erreichen, und **dadurch gekennzeichnet, dass** es die Phase beinhaltet:
- Ankündigung, durch den ersten Standortserver der mindestens zwei Ausbreitungswege an mindestens einen zweiten Standortserver einer zweiten Telefonie-Domäne benachbart zur ersten.

2. Verfahren zum Propagieren von Routingrouten durch einen ersten Standortserver einer ersten IP-Telefoniedomäne nach Anspruch 1, **dadurch gekennzeichnet, dass** es Folgendes umfasst:
- eine vorläufige Phase der Aushandlung einer Mehrfach-Telefonie-Routing-Verwaltungsfähigkeit, basierend auf mindestens einem vorbestimmten Parameter, mit dem mindestens einen zweiten Standortserver;
eine vorherige Phase des Verhandelns einer Anzahl von zu ändernden Ausbreitungswegen, die dem gleichen Ziel zwischen dem ersten und dem mindestens einen zweiten Standortserver dienen.

3. Verfahren zum Propagieren von Routen durch einen ersten Server zum Lokalisieren einer ersten IP-Telefoniedomäne gemäß dem
Anspruch 1, **dadurch gekennzeichnet, dass** die Phase des Empfangens von mindestens zwei Ausbreitungswegen zum Erreichen des Ziels die folgenden Schritte umfasst:
- Empfangen von mindestens einer Aktualisierungsnachricht, die die mindestens zwei Ausbreitungswege beinhaltet;
- Auswählen von mindestens einem Weg aus den Ausbreitungswegen zu
Halten gemäß mindestens einem vorbestimmten Parameter zur Auswahl der Verbreitungsroute;
Hinzufügen des mindestens einen in einer Datenbank zu speichernden Weges von Telefon-Routen-Daten.

4. Ausbreitungsverfahren nach Anspruch 3, **dadurch gekennzeichnet, dass** der Schritt der Auswahl mindestens einer zu haltenden Route mindestens einen Markierungsparameter aus den mindestens zwei Ausbreitungswegen berücksichtigt.

5. Verfahren zum Signalisieren von Leitweglenkungen zu einem Ziel durch einen ersten Proximity-Server, der zu einer ersten IP-Telefonie-Domäne gehört und angepasst ist, um von Kunden der ersten Telephonie-Domäne oder eines anderen Proximity-Servers empfangene Signalisierungsnachrichten zu verarbeiten, wobei die IP-Telefonie-Domäne mindestens einen ersten Standortserver umfasst, der angepasst ist, um Kundenstandorte und Telefoniewege der ersten Telefonie-Domäne zu verwalten, sowie eine Schnittstelle mit einem benachbarten Standortserver, um den Standort von Kunden zu erfahren, die von anderen IP-Telefonie-Domänen verwaltet werden, wobei eine Telefonie-Route eine Liste von Zieladressen ist, die einem Anwendungsprotokoll zugeordnet sind,
wobei das Verfahren **dadurch gekennzeichnet ist, dass** es die folgenden Schritte umfasst:
- Abfragen des ersten Standortservers durch den ersten Näherungsserver auf den Telefonie-Routen, den sogenannten Dienst-Routen, die es ermöglichen, das Ziel zu erreichen;
- Empfangen von mindestens zwei Dienstrouten durch den ersten Proximity-Server von dem ersten Standortserver; Auswählen einer Dienstroute durch den ersten Proximity-Server unter den mindestens zwei Dienstrouten, die von dem ersten Standortserver empfangen werden, der ausgewählten Dienstroute;
- Einfügen einer Liste von aufeinanderfolgenden zu überquerenden IP-Telefonie-Domänen durch den ersten Proximity-Server, die die Dienstroute bilden.
ausgewählt, in einer ersten Signalisierungsnachricht;
- Übertragen der ersten Signalisierungsnachricht an den Proximity-Server einer in der Liste platzierten IP-Telefoniedomäne durch den ersten Proximity-Server.

6. Signalisierungsverfahren nach Anspruch 5, **dadurch gekennzeichnet, dass** die erste Signalisierungsnachricht gemäß dem SIP-Protokoll implementiert ist und dass sie mindestens ein Attribut beinhaltet, das es ermöglicht, eine Liste von IP-Telefonie-Domänen anzuzeigen, die von der ausgewählten Dienstleitung durchquert werden.

7. Verfahren zur Signalisierung von Leitweglenkungen an ein Ziel durch einen Server in der Nähe einer IP-Telefonie-Domäne gemäß dem Anspruch 5, **dadurch gekennzeichnet, dass** er umfasst:
- eine Phase des Empfangens einer zweiten Signalisierungsnachricht von einem zweiten Proximity-Server;
- eine Phase des Extrahierens der zweiten Signalisierungsnachricht aus der Liste der IP-Telefonie-Domänen, die durch die Serviceroute ausgewählt;
- eine Phase des Aktualisierens der mindestens einen Liste von IP-Telefonie-Domänen, wenn die erste Domäne, die mit dem ersten Proximity-Server verbunden ist, innerhalb der Liste identifiziert wird;
- eine Routensuchphase, die dem Ziel dient, wenn die erste Domäne nicht innerhalb der Liste identifiziert wird.

8. Standortserver, der zu einer ersten IP-Telefonie-Domäne gehört und angepasst ist, um Kundenstandorte und Telefonie-Routen der ersten IP-Telefonie-Domäne zu verwalten, sowie eine Schnittstelle mit einem benachbarten Standortserver, um den Standort von Kunden zu erfahren, die von anderen IP-Telefonie-Domänen verwaltet werden, wobei eine Telefonie-Route eine Liste von Zieladressen ist, die einem Anwendungsprotokoll zugeordnet sind,
die die folgenden Mittel umfasst::
- Empfangen von mindestens zwei Telefonwegen von mindestens einem benachbarten Standortserver, um ein Telefonziel, die so genannten Ausbreitungswege, mittels einer ersten Ausbreitungsnachricht zu erreichen:
**dadurch gekennzeichnet, dass** es die folgenden Mittel beinhaltet:
- Ankündigen der mindestens zwei Routen an mindestens einen zweiten Server
den Standort einer zweiten Telefon-Domain neben der ersten.

9. Proximity-Server, der zu einer ersten IP-Telefonie-Domäne gehört und angepasst ist, um von Kunden der ersten Telefonie-Domäne oder eines anderen Proximity-Servers empfangene Signalisierungsnachrichten zu verarbeiten, wobei die IP-Telefonie-Domäne mindestens einen ersten Standortserver umfasst, der angepasst ist, um Kundenstandorte und Telefonie-Routen der ersten Telefonie-Domäne zu verwalten, sowie die Kopplung mit einem benachbarten Standortserver, um den Standort von Kunden zu erfahren, die von anderen IP-Telefoniedomänen verwaltet werden, wobei eine Telefonie-Route eine Liste von Zieladressen ist, die einem Anwendungsprotokoll zugeordnet sind, wobei der Proximity-Server **dadurch gekennzeichnet ist, dass** er die Mittel von :
- Abfragen des ersten Standortservers auf den Routen von Telefonie, bekannt als Dienstwege, die es ermöglichen, das genannte Ziel zu erreichen;
- Empfangen von mindestens zwei Dienstrouten von dem ersten Standortserver;
- Auswählen einer Dienstroute aus den mindestens zwei überarbeiteten Dienstrouten des ersten Standortservers, wobei die ausgewählte Dienstroute;
- Einfügen einer Liste von aufeinanderfolgenden IP-Telefonie-Domänen, die zu überqueren sind.
- Zusammensetzen des ausgewählten Dienstweges in einer ersten
Signalnachricht ;
- Übertragen der ersten Signalisierungsnachricht an den Server
in der Nähe einer IP-Telefonie-Domäne, die ganz oben in der Liste steht.

10. Näherungsserver nach Anspruch 9, **dadurch gekennzeichnet, dass** er die folgenden Mittel beinhaltet:
- Empfangen einer zweiten Signalisierungsnachricht von einem zweiten nahegelegenen Server;
- Extrahieren der zweiten Signalisierungsnachricht aus der Liste der
IP-Telefonie-Domänen, die von der ausgewählten Dienstroute durchquert werden;
- Aktualisieren der mindestens einen Liste von IP-Telefonie-Domänen, wenn die erste Domäne, die an den Proximity-Server angehängt ist, innerhalb der Liste identifiziert wird;
- Suchen nach einer Telefonie-Route, die das Ziel abdeckt, wenn die erste Domäne nicht innerhalb der Liste identifiziert wird.

11. Computerprogrammprodukt, das aus einem Kommunikationsnetzwerk heruntergeladen und/oder auf einem computerlesbaren und/oder mikroprozessorausführbaren Medium gespeichert werden kann, **dadurch gekennzeichnet, dass** es Programmcodeanweisungen für ("Ausführen des Ausbreitungsverfahrens nach Anspruch 1, wenn es auf einem Computer ausgeführt wird") beinhaltet.

12. Computerprogrammprodukt, das aus einem Kommunikationsnetzwerk heruntergeladen und/oder auf einem computerlesbaren und/oder mikroprozessorausführbaren Medium gespeichert werden kann, **dadurch gekennzeichnet, dass** es Programmcodeanweisungen für ("Ausführen des Signalisierungsverfahrens nach Anspruch 5, wenn es auf einem Computer ausgeführt wird") beinhaltet.

## Claims

1. A method of propagating routes for routing at least one digital stream towards a destination by a first location server belonging to a first IP telephony domain and suitable for managing locations of clients and telephony routes of said first IP telephony domain, as well as being in interface with a neighboring location server to learn location of clients managed by other IP telephony domains, wherein a telephony route is list of addresses associated to an application protocol, said method comprising the following stages:
- said first location server receiving at least two telephony routes from at least one neighboring location server enabling a destination to be reached, referred to as propagation routes, by a first propagation message; and **characterized in that** it comprises the stage of
- said first location server advertising said at least two propagation routes to at least one second location server of a second telephony domain neighboring the first.

2. A method for propagating routes by a first location server of a first IP telephony domain as defined in claim 1, **characterized in that** the method comprising:
- a prior stage of negotiating a multiple telephony routes management capability as a function of at least one predetermined parameter with said at least one second location server; and
- a prior stage of negotiating a number of propagation routes to exchange serving a common destination between said first location server with said at least one second location server.

3. A method for propagating routing routes by a first location server of a first IP telephony domain as defined in claim 1, **characterized in that** said stage of receiving at least two propagation routes enabling said destination to be reached comprises the following steps:
- receiving at least one update message containing said at least two propagation routes;
- selecting amongst said propagation routes, at least one route to maintain in accordance with at least one predetermined propagation route selection parameter;
- adding said at least one route to maintain to a telephony routes database.

4. A propagation method as defined in claim 3, **characterized in that** said step of selecting at least one route to maintain takes into account at least one marking parameter coming from said at least two propagation routes.

5. A method of signaling routes towards a destination by a first proxy server belonging to a first IP telephony domain and suitable for processing signaling messages received from clients of said first telephony domain or from another proxy server, said IP telephony domain including at least one first location server suitable for managing locations of clients and telephony routes of the first telephony domain, as well as being in interface with a neighboring location server to learn location of clients managed by other IP telephony domains, wherein a telephony route is a list of addresses associated with an application protocol, said method being **characterized in that** it comprises the following steps:
- said first proxy server requesting from said first location server the telephony routes, referred to as service routes, enabling said destination to be reached;
- receiving by said first proxy server, from said first location server, of at least two service routes;
- said first proxy server selecting a service route amongst said least two service routes received from said first location server, referred to as a selected service route;
- inserting into a first signaling message a list of successive IP telephony domains to be passed through making said selected service route;
- sending by said first proxy server of said first signaling message to the proxy server of an IP telephony domain placed in said list.

6. A method of signaling as defined in claim 5, **characterized in that** said first signaling message is implemented using an SIP protocol, and wherein the message includes at least one attribute allowing to indicate a list of IP telephony domains through which said selected service route passes.

7. A method of signaling routing routes towards a destination by a proxy server of a IP telephony domain as defined in claim 5, **characterized in that** it comprises:
- a stage of receiving a second signaling message coming from a second proxy server;
- a stage of extracting said second signaling message from said list of IP telephony domains through which said selected service route passes;
- a stage of updating said at least one list of IP telephony domains when said first domain attached to said first proxy server is identified within said list;
- a stage of searching a route serving said destination when said first domain is not identified within said list.

8. A location server belonging to a first IP telephony domain and suitable for managing locations of clients and telephony routes of the first IP telephony domain, as well as being in interface with a neighboring location server to learn the location of clients managed by other IP telephony domains, wherein a telephony route is a list of addresses of destination associated with an application protocol, the server comprising means for:
- receiving at least two telephony routes from at least one neighboring location server enabling a telephony destination to be reached, referred to as propagation routes, received by a first propagation message;
**characterized in that** it comprises means for:
- advertising said at least two routes to at least one second location server of a second telephony domain neighboring the first telephony domain.

9. A proxy server of a first IP telephony domain and suitable for processing signaling messages received from clients of said first telephony domain or from another proxy server, said IP telephony domain including at least one first location server suitable for managing locations of clients and telephony routes of the first telephony domain, as well as being in interface with a neighboring location server to learn location of clients managed by other IP telephony domains, wherein a telephony route is a list of addresses of destination associated with an application protocol, said proxy server being **characterized by** comprising means for:
- requesting from said first location server telephony routes, referred to as service routes, allowing to reach said destination;
- receiving from said first location server at least two service routes;
- selecting a service route amongst said at least two service routes received from said first location server, referred to as said selected service route;
- inserting into a first signaling message a list of successive IP telephony domains through which said selected service route passes;
- sending said first signaling message to the proxy server of an IP telephony domain placed first in said list.

10. A proxy server as defined in claim 9, **characterized in that** it includes means for:
- receiving a second signaling message coming from a second proxy server;
- extracting from said second signaling message said list of IP telephony domains through which said selected service route passes;
- updating said at least one list of IP telephony domains when said first domain attached to said proxy server is identified within said list;
- searching for a telephony route serving said destination when said first domain is not identified within said list.

11. A computer program product downloadable from a communication network and/or stored on a computer-readable medium and/or executable by a microprocessor, **characterized in that** it comprises program code instructions for executing the method of propagating as defined in claim 1, when executed on a computer.

12. A computer program product downloadable from a communication network and/or stored on a computer-readable medium and/or executable by a microprocessor, **characterized in that** it comprises program code instructions for executing the method of signaling as defined in claim 5, when executed on a computer.
